# FASCICULE DE BREVET EUROPEEN

(11) **EP 0 366 580 B1**
(45) Date de publication et mention de la délivrance du brevet: **29.09.1993**
(21) Numéro de dépôt: 89440116.5
(22) Date de dépôt: 24.10.1989
(51) Int. Cl.: A01D 34/66, A01D 75/18

(54) **Faucheuse avec montage perfectionné des organes de coupe**
Mähmaschine mit Schneidelementen
Mower with assembly of cutting elements

(30) Priorité: 26.10.1988 FR 8814235
(43) Date de publication de la demande: 02.05.1990
(73) Titulaire: KUHN S.A., F-67700 Saverne (FR)
(72) Inventeur: Neuerburg, Horst, F-67700 Saverne (FR)

(56) Documents cités:
- EP-A- 0 171 341
- EP-A- 0 240 084
- EP-A- 0 325 548
- DE-A- 2 407 821
- DE-A- 3 706 222
- FR-A- 1 536 949
- GB-A- 908 261
- GB-A- 2 068 703
- GB-A- 2 179 534
- US-A- 3 044 241

## Description

La présente invention concerne une faucheuse comportant notamment une barre de coupe munie d'une poutre porteuse au-dessus de laquelle s'étend une pluralité d'organes de coupe rotatifs, lesdits organes de coupe rotatifs tournant chacun autour d'un axe géométrique dirigé vers le haut et au moins un desdits organes de coupe rotatifs étant entraîné par le bas au moyen d'organes d'entraînement logés dans ladite poutre porteuse et comportant des roues dentées, chaque organe de coupe rotatif entraîné par le bas étant lié rigidement à un arbre tournant autour de l'axe géométrique correspondant et étant, à cet effet, guidé dans un palier à roulement lié rigidement à ladite poutre porteuse, ledit arbre étant lié rigidement à son extrémité inférieure à une desdites roues dentées.

De telles faucheuses sont largement connues sur le marche et dans la EP-A-240084 qui décrit une faucheuse comportant les caractéristiques du préambule de la revendication 1. Au travail, elles sont attelées à un véhicule tracteur et leurs organes de coupe rotatifs sont entraînés en rotation à partir d'une source motrice qui est le plus souvent constituée par la prise de force dudit véhicule tracteur. En tournant, lesdits organes de coupe rotatifs coupent le produit à récolter. Au cours du fauchage, il peut arriver qu'un desdits organes de coupe rotatifs arrive en contact avec un obstacle qui peut freiner ou bloquer momentanément la rotation de cet organe de coupe rotatif. La source motrice, par contre, continue à délivrer de la puissance. Les autres organes de coupe rotatifs non freinés ou bloqués, quant à eux, restituent alors très brutalement l'énergie cinétique qu'ils ont emmagasinée compte tenu de leur masse et de leur vitesse de rotation élevée. L'absorption brutale de cette énergie cinétique et de l'énergie fournie par la source motrice, par la ou les roues dentées liées à l'organe de coupe rotatif freiné ou bloqué, peut provoquer des ruptures de la denture de ces roues dentées. Or, on sait en pratique, qu'une rupture au niveau d'une dent d'une roue dentée peut entraîner une sorte de réaction en chaîne aboutissant à la détérioration d'autres roues dentées. Réparer une barre de coupe ayant subi une telle détérioration, nécessite non seulement une immobilisation très longue de la faucheuse avec risque de pertes de récolte, mais occasionne en sus des frais très lourds.

Dans la US-A-3,044,241 est décrite une tondeuse à gazon. Celle-ci comporte, de manière connue, un carter qui s'appuie sur le sol au moyen de quatre roues, un manche servant à guider et/ou pousser la tondeuse, un moteur fixé sur le dessus du carter et une lame rotative s'étendant sous le carter et fixée à l'extrémité libre de l'arbre du moteur.

L'objet de l'invention décrite dans la US-A-3,044,241 réside dans la liaison entre la lame et l'extrémité libre de l'arbre du moteur, de telle sorte que, lorsque l'extrémité de la lame entre en collision avec un obstacle, il n'y ait pas de risque de rupture de l'arbre du moteur, car une telle rupture entraîne des coûts de réparation élevés. Du reste, cette liaison est telle que la lame ne puisse pas se désolidariser de l'arbre en cas de collision, car celà présenterait un grand danger.

A cet effet, il est prévu que la lame soit fixée à l'arbre du moteur à l'aide d'un moyeu qui est destiné à se fendre en cas d'effort excessif. Ce moyeu est structuré de la manière suivante. Il comporte une partie cylindrique dont l'axe longitudinal est confondu avec l'axe longitudinal de l'arbre du moteur, et un flasque prévu à l'extrémité inférieure de ladite partie cylindrique et s'étendant orthogonalement à l'axe longitudinal de celle-ci, c'est-à-dire dans un plan horizontal. Un alésage à diamètre variable traverse le moyeu de part en part suivant l'axe longitudinal de la partie cylindrique. Cet alésage présente dans sa partie supérieure un diamètre égal à celui de l'arbre du moteur, puis, dans sa partie médiane, un diamètre nettement plus petit et enfin, dans sa partie inférieure, un diamètre compris entre la valeur du diamètre de la partie supérieure et la valeur du diamètre de la partie médiane. Dans la partie supérieure de l'alésage est, du reste, réalisée une rainure de clavette. Sur sa surface extérieure, la partie cylindrique du moyeu comporte enfin une rainure qui s'étend suivant une génératrice depuis l'extrémité supérieure de la partie cylindrique jusqu'au niveau de la frontière entre la partie médiane et la partie inférieure de l'alésage. Le moyeu ainsi constitué, est fixé à la lame au niveau de son flasque par des boulons. L'ensemble est glissé sur l'extrémité libre de l'arbre moteur et est lié à celle-ci d'une part en rotation au moyen d'une clavette et d'autre part en translation au moyen d'une vis qui traverse la lame, s'étend au travers des parties inférieure et médiane de l'alésage et est vissée dans un trou fileté prévu à l'extrémité libre de l'arbre du moteur.

Cette liaison fonctionne de la manière suivante. En travail normal, l'arbre du moteur entraîne le moyeu et la lame qui y est fixée au moyen de la clavette. Lorsque l'extrémité de la lame heurte un obstacle sérieux, la partie cylindrique du moyeu se fend suivant la rainure pratiquée le long d'une génératrice de la surface extérieure de ladite partie cylindrique et s'ouvre de telle sorte que la rotation de l'arbre moteur ne puisse pas être bloquée. Bien que la liaison en rotation entre l'arbre du moteur et le moyeu soit interrompue, la liaison en translation, assurée par la vis vissée dans l'arbre du moteur et la rondelle élastique interposée entre la tête de ladite vis et la lame, reste opérationnelle, évitant ainsi la désolidarisation de la lame avec l'arbre du moteur.

Le but de la présente invention est de solutionner le problème des faucheuses telles que celle décrite dans la EP-A-240 084 par exemple, sans que l'épaisseur de la barre de coupe n'augmente de manière gênante, étant donné que le produit coupé par les organes de coupe rotatifs, doit passer par-dessus lesdits organes de coupe rotatifs.

A cet effet, la faucheuse selon la présente invention est caractérisée par le fait que l'arbre d'un organe de coupe rotatif entraîné par le bas comporte une zone de rupture à son extrémité s'étendant vers le haut, en-dehors du roulement.

Dans la faucheuse selon l'invention, on a ainsi déterminé d'avance l'endroit où se produira la rupture en cas d'effort brutal engendré par un freinage ou un blocage d'un organe de coupe rotatif. Avantageusement, cet endroit se situe au niveau de l'arbre et non au niveau de la denture de la roue dentée correspondante. En sus, cette zone de rupture est prévue à l'extrémité de l'arbre s'étendant vers le haut, en-dehors du roulement. Ainsi, en cas de rupture, l'organe de coupe rotatif se désolidarise entièrement de la barre de coupe et ne risque donc pas, à son tour, de freiner ou de bloquer les organes de coupe rotatifs adjacents. En sus, le bout d'arbre restant et, en définitive, la roue dentée correspondante continuent à être parfaitement guidés en rotation par le roulement. De cette sorte, l'engrènement de ladite roue dentée avec la ou les roues dentées adjacentes reste parfaitement assuré.

La faucheuse selon l'invention présente donc une très grande sécurité au niveau des organes d'entraînement logés dans la poutre porteuse. De cette sorte, en cas de rupture, le temps d'immobilisation et les frais de réparation seront très limités. Il suffira, en effet, de remplacer simplement l'arbre rompu.

Il convient enfin de faire observer que la zone de rupture prévue sur l'arbre n'augmente pas du tout, voire très peu, la longueur de cet arbre, de telle sorte que le profil de la barre de coupe ne varie pas ou, du moins, très peu. L'évacuation du produit coupé par les organes de coupe rotatifs n'est donc nullement gênée.

Un remplacement encore plus rapide sera obtenu, lorsque le palier est centré dans un alésage correspondant pratiqué dans la partie supérieure de la poutre porteuse et dont le diamètre sera supérieur au diamètre extérieur de la roue dentée correspondante, le corps du palier étant lié rigidement, mais de manière démontable, à la partie supérieure de la poutre porteuse par des organes d'assemblage pouvant être manoeuvrés de l'extérieur de la poutre porteuse. Dans ce cas, il ne sera même pas nécessaire de transporter la faucheuse dans un atelier de réparation. La réparation pourra en effet être effectuée dans le champ même, puisque la poutre porteuse n'a pas besoin d'être complètement ouverte. Il suffira simplement de démonter le palier guidant l'arbre rompu, ce qui est possible, puisque les organes d'assemblage liant le corps du palier à la poutre porteuse, peuvent être manoeuvrés de l'extérieur, et que le diamètre de l'alésage pratiqué dans la poutre porteuse est plus grand que le diamètre extérieur de la roue dentée correspondante. Lorsque le palier avec l'arbre rompu et la roue dentée correspondante est démonté, on pourra mettre en place un ensemble neuf comportant par exemple un palier, un arbre et une roue dentée prémontés, de sorte que la faucheuse est très rapidement à nouveau prête à fonctionner. Cette caractéristique est particulièrement avantageuse pour les utilisateurs qui ne peuvent pas tolérer de pertes de temps lors de la récolte.

Avantageusement, la zone de rupture est constituée par un important changement de section de l'arbre. Préférentiellement, cet important changement de section de l'arbre est formé par une gorge.

Selon une caractéristique supplémentaire de l'invention, l'arbre d'un organe de coupe rotatif entraîné par le bas comporte à son extrémité s'étendant vers le haut, en-dehors du roulement, un organe d'arrêt prévu entre ladite zone de rupture et la bague intérieure du roulement et destiné à empêcher la translation de l'arbre suivant l'axe géométrique de rotation correspondant, notamment après rupture dudit arbre au niveau de la zone de rupture.

Dans ce cas, l'organe d'arrêt empêche le bout d'arbre restant de glisser vers le bas, si l'utilisateur ne s'aperçoit pas immédiatement qu'une rupture s'est produite. On évite ainsi que la roue dentée qui est liée à l'extrémité inférieure du bout d'arbre restant, vienne en contact avec la partie inférieure de la poutre porteuse.

Cette caractéristique est par ailleurs particulièrement intéressante lorsque le roulement est un roulement à double rangée de billes à contact oblique dont la bague intérieure est en deux parties. Après rupture de l'arbre, l'organe d'arrêt maintient ainsi les deux parties de la bague intérieure du roulement au moins sensiblement en place. Dans ce cas, le guidage en rotation du bout d'arbre restant et de la roue dentée correspondante est également parfaitement assuré en vue d'un maintien de l'engrènement entre ladite roue dentée et les roues dentées adjacentes.

Une réalisation particulièrement simple de cet organe d'arrêt est obtenue lorsque l'organe d'arrêt est constitué par un épaulement réalisé directement sur l' arbre .

Dans l'invention, il peut être prévu qu'à son extrémité supérieure l'arbre soit lié rigidement à un entraîneur auquel est lié rigidement l'organe de coupe rotatif correspondant. La bague intérieure du roulement est, quant à elle, serrée entre cet entraîneur et la roue dentée liée rigidement à l'extrémité inférieure dudit arbre. Il peut en sus, être prévu que l'entraîneur soit lié rigidement et de manière indémontable à l'extrémité supérieure de l'arbre, tandis que la roue dentée est liée rigidement mais de manière démontable à l'extrémité inférieure dudit arbre. La bague intérieure du roulement peut alors être serrée entre ledit entraîneur et ladite roue dentée au moyen d'un organe de liaison à filetage vissé à l'extrémité inférieure de l'arbre.

Dans ces deux cas notamment, il est prévu qu'avant rupture de l'arbre au niveau de la zone de rupture, il existe un très faible jeu entre l'organe d'arrêt et la bague intérieure du roulement.

De cette sorte, on assure que la bague intérieure du roulement soit effectivement serrée entre l'entraîneur et la roue dentée correspondants.

Dans les cas où l'organe d'arrêt n'est prévu que pour maintenir le bout d'arbre restant après rupture, il est possible de lui donner une hauteur et une largeur relativement faibles. Ceci assure une portée maximale entre l'entraîneur et l'arbre d'une part et entre l'entraîneur et la bague intérieure du roulement d'autre part, sans notamment pénaliser l'épaisseur de la barre de coupe.

L'invention sera mieux comprise grâce à la description suivante d'un exemple non limitatif de réalisation faite en référence au dessin annexé sur lequel :
- la figure 1 représente une vue de l'arrière d'une faucheuse selon l'invention attelée à un véhicule tracteur,
- la figure 2 représente à une échelle agrandie, une vue de dessus partielle du groupe de fauche de la faucheuse de la figure 1,
- la figure 3 représente une vue partielle du groupe de fauche de la figure 2, coupé suivant le plan III - III,
- la figure 4 représente à une échelle très agrandie, le montage de l'arbre d'un organe de coupe dans le roulement et l'entraîneur correspondants,
- la figure 5 représente à une échelle agrandie une vue partielle en coupe suivant le plan V - V du montage d'un organe de coupe avant rupture de l'arbre, et
- la figure 6 visualise la rupture de l'arbre au niveau de la zone de rupture.

La faucheuse (1) selon l'invention comporte un groupe de fauche (2) et un châssis (3) auquel est lié ce groupe de fauche (2).

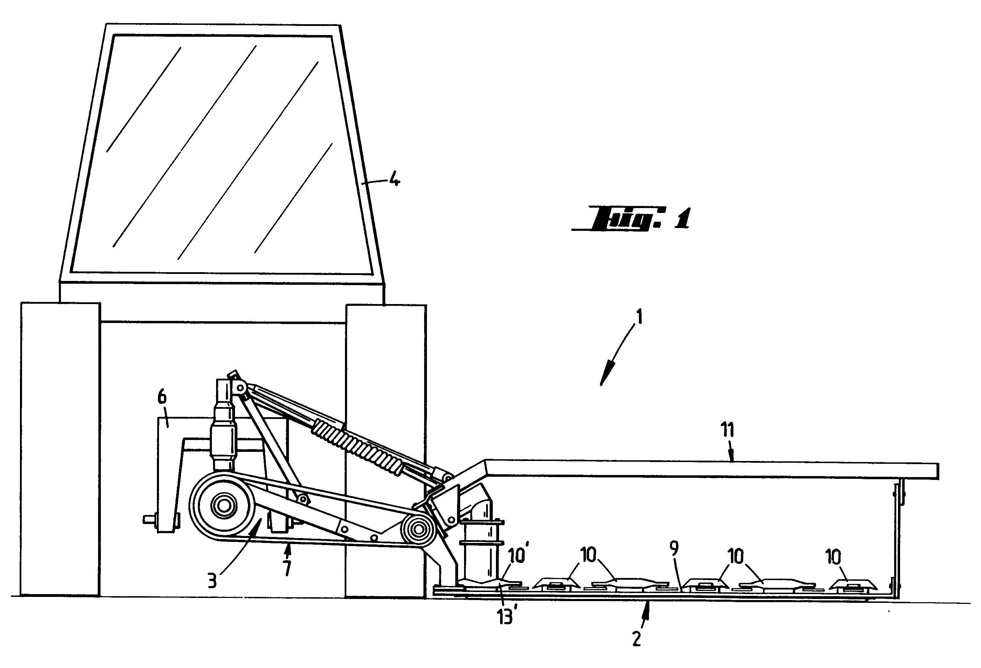

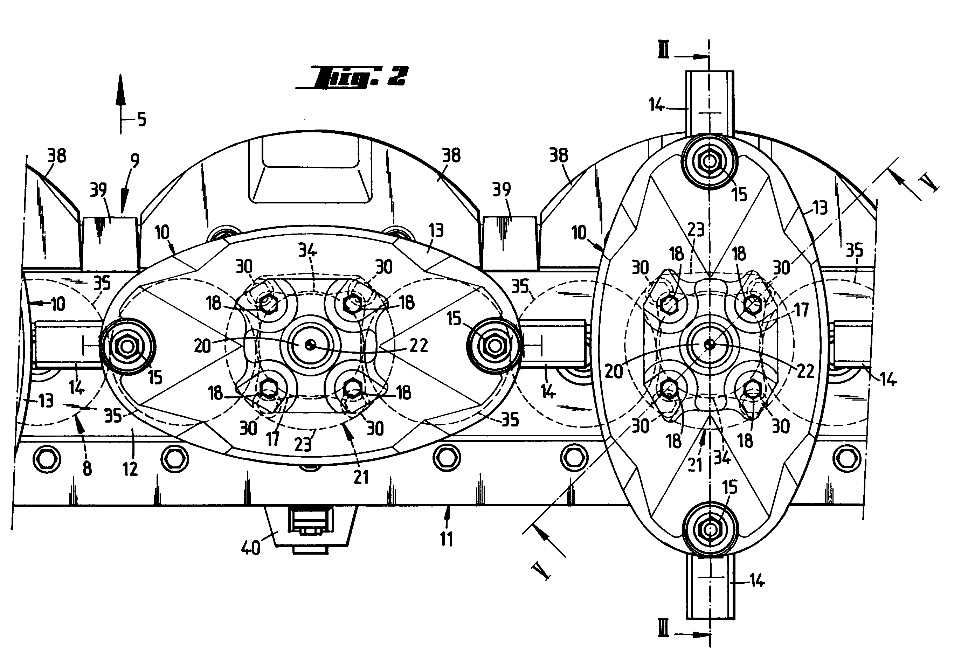

Au travail, la faucheuse (1) est attelée au dispositif d'attelage (non représenté) d'un véhicule tracteur (4) de telle sorte que le groupe de fauche (2) s'étende transversalement à la direction de travail (5) (voir figure 2). A cet effet, le châssis (3) est muni d'un dispositif d'attelage (6) destiné à être accouplé au dispositif d'attelage du véhicule tracteur (4).

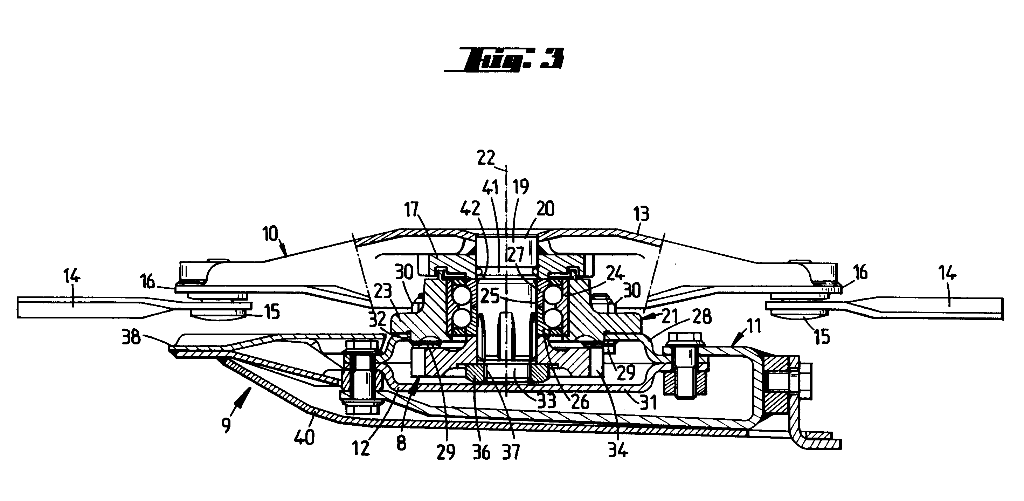

Le châssis (3) supporte également une partie des organes de transmission (7) transmettant le mouvement depuis la prise de force (non représentée) du véhicule tracteur (4) jusqu'aux organes d'entraînement (8) (voir figures 2 et 3) du groupe de fauche (2).

Le groupe de fauche (2) comporte une barre de coupe (9) munie d'organes de coupe rotatifs (10, 10′) et une structure porteuse (11) qui porte la barre de coupe (9) et par l'intermédiaire de laquelle le groupe de fauche (2) est lié au châssis (3).

Cette barre de coupe (9) apparaît plus en détail sur les figures suivantes. Elle comporte une poutre porteuse (12) qui est constituée sous forme de carter au-dessus duquel s'étendent les organes de coupe (10, 10′). Chaque organe de coupe ( 10, 10′) est constitué par un organe support (13, 13′), des outils de coupe (14) et des dispositifs de liaison (15) liant chacun de manière articulée un outil de coupe (14) au bord extérieur (16) de l'organe support (13, 13′).

Chaque organe de coupe (10) entraîné par le bas est lié à un entraîneur (17) au moyen d'un certain nombre de vis (18). Cet entraîneur (17) est lié rigidement à l'extrémité supérieure (19) d'un arbre (20). Dans l'exemple représenté, cette liaison est faite par soudure de telle sorte que l'entraîneur (17) est lié de manière indémontable à l'arbre (20) . L'arbre (20) est guidé en rotation dans un palier à roulement (21) autour d'un axe géométrique (22) dirigé vers le haut. Ce palier à roulement (21) comporte un corps de palier (23) et un roulement (24). Dans l'exemple représenté, ce roulement (24) est un roulement à double rangée de billes à contact oblique dont la bague intérieure (25) est en deux parties (26, 27). Le corps de palier (23) est lié de manière démontable à la partie supérieure (28) de la poutre porteuse (12) au moyen de vis (29) et d'écrous (30) pouvant être manoeuvrés de l'extérieur , c'est-à-dire sans avoir à démonter la partie supérieure (28) de la partie inférieure (31) qui constituent la poutre porteuse (12). Sur la figure 3, il apparaît en sus que le corps de palier (23) est centré dans un alésage (32) prévu à cet effet dans la partie supérieure (28) de la poutre porteuse (12). A son extrémité inférieure (33) qui s'étend à l'intérieur de la poutre porteuse (12), l'arbre (20) est lié rigidement à une roue dentée cylindrique (34). Le diamètre extérieur de cette roue dentée (34) est inférieur au diamètre de l'alésage (32). Ladite roue dentée (34) engrène avec des roues dentées cylindriques intermédiaires (35) (figure 2) également logées dans la poutre porteuse (12). Ces roues dentées cylindriques (34, 35) constituent les organes d'entraînement (8). Bien que la roue dentée cylindrique (34) soit liée de manière rigide à l'arbre (20), cette liaison est toutefois démontable. Du reste, il apparaît encore sur la figure 3 que la bague intérieure (25) du roulement (24) est serrée entre l'entraîneur (17) et la roue dentée cylindrique (34) au moyen d'un écrou (36) vissé sur une partie filetée (37) prévue à l'extrémité inférieure (33) de l'arbre (20).

A l'avant, la poutre porteuse (12) est munie d'organes de protection (38) qui s'étendent chacun sous un organe de coupe (10, 10′). Ces organes de protection (38) ont pour fonction de protéger l'organe support (13, 13′) de l'organe de coupe (10, 10′) contre certains obstacles se trouvant sur le terrain à faucher. Sur la figure 2, on voit en sus qu'entre deux organes de protection (38) voisins est agencé un organe de blindage (39) qui coiffe le bord frontal de la poutre porteuse (12) et qui a une largeur sensiblement égale à la distance séparant deux organes de protection (38) adjacents. A chaque organe de protection (38) est par ailleurs fixé un patin (40) qui s'étend vers l'arrière en passant sous la poutre porteuse (12) et qui est fixé à l'arrière à la stucture porteuse (11). C'est par l'intermédiaire de ces patins (40) que la poutre porteuse (12) et en définitive le groupe faucheur (2) glissent sur le sol pendant le travail.

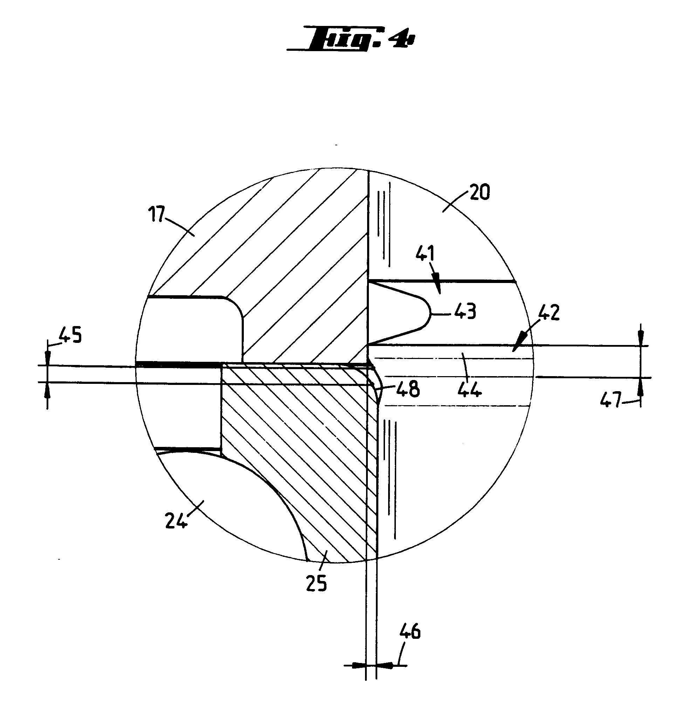

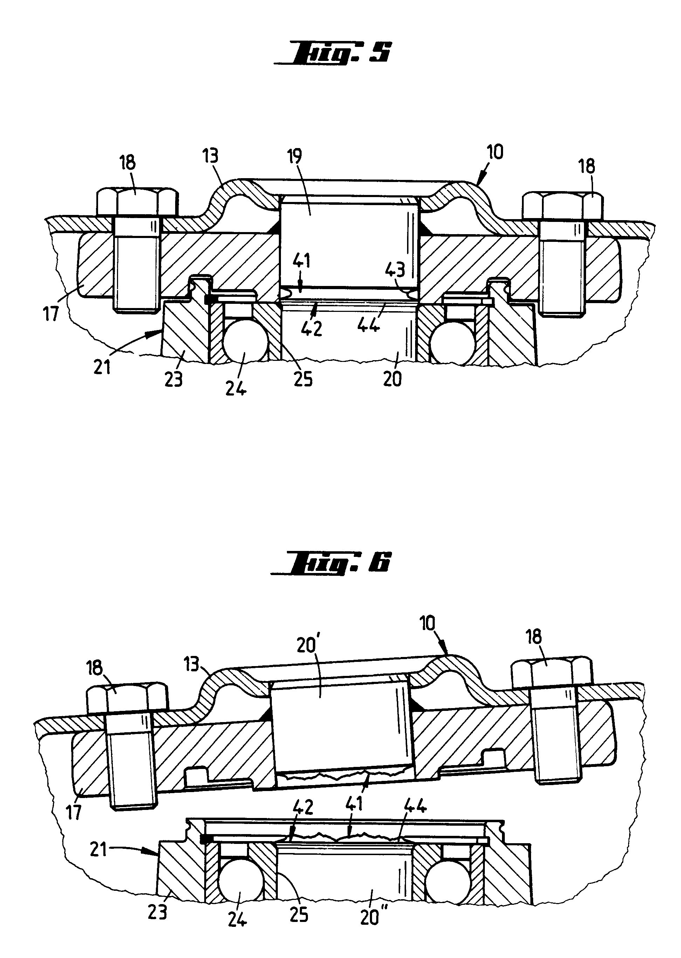

Sur la figure 3, on voit aussi que conformément à un aspect de l'invention, l'arbre (20) d'un organe de coupe rotatif (10) entraîné par le bas comporte une zone de rupture (41) à son extrémité supérieure (19) s'étendant vers le haut en dehors du roulement (24). Selon un aspect supplémentaire de l'invention, il est également prévu un organe d'arrêt (42) agencé entre ladite zone de rupture (41) et la bague intérieure (25) du roulement (24). Cet organe d'arrêt (42) est destiné à empêcher la translation du bout (20˝) de l'arbre (20) (figure 6) suivant l'axe géométrique (22) après rupture dudit arbre (20) au niveau de la zone de rupture (41).

Cette zone de rupture (41) et cet organe d'arrêt (42) apparaissent plus en détail sur la figure 4.

La zone de rupture (41) est, dans l'exemple représenté, constituée par une gorge (43) relativement profonde de sorte à créer un important changement de section. La forme ainsi que les dimensions de cette gorge (43) sont telles qu'à ce niveau, la résistance de l'arbre (20) aux efforts anormaux soit inférieure à la résistance de la denture de la roue dentée (34).

L'organe d'arrêt (42) quant à lui, est, dans l'exemple représenté, constitué par un épaulement (44) que comporte l'arbre (20). Comme dit plus haut, cet épaulement (44) est prévu entre la gorge (43) et la bague intérieure (25) du roulement (24). Afin d'assurer que la bague intérieure (25) du roulement (24) soit effectivement serrée entre la roue dentée (34) et l'entraîneur (17), il est prévu, avant rupture de l'arbre (20), un certain jeu (45) entre la bague intérieure (25) du roulement (24) et ledit épaulement (44). Ce jeu (45) doit être avantageusement très faible afin d'assurer que les deux parties (26, 27) de la bague intérieure (25) du roulement (24) ne puissent pratiquement pas s'écarter l'une de l'autre après rupture de l'arbre (20). Sur la figure 4, on voit aussi que la hauteur (46) et la largeur (47) de l'épaulement (44) sont avantageusement relativement faibles. Dans l'exemple représenté, la hauteur (46) de l'épaulement (44) ne dépasse pas la valeur du rayon (48) de la bague intérieure (25) du roulement (24).

La faucheuse (1) selon l'invention fonctionne de la manière suivante.

Au travail, le véhicule tracteur (4) la déplace dans la direction de travail (5). La prise de force dudit véhicule tracteur (4) fournit le mouvement aux organes de transmission (7) qui le transmettent aux organes d'entraînement (8) logés dans la poutre porteuse (12) en vue de l'entraînement en rotation des organes de coupe rotatifs (10, 10′) autour de l'axe géométrique (22) correspondant.

Lorsque, au cours du travail, un organe de coupe (10) entraîné par le bas arrive accidentellement en contact avec un obstacle, cet organe de coupe (10) sera freiné voire bloqué. La prise de force du véhicule tracteur (4) par contre continue à délivrer de la puissance. Les autres organes de coupe rotatifs (10) ont, compte tenu de leur masse de leur vitesse de rotation élevée, emmagasiné une importante énergie cinétique qu'ils vont brutalement restituer . L'absorption brutale de cette énergie cinétique et de l'énergie fournie par la prise de force entraîne en général une rupture.

Dans la faucheuse (1) selon l'invention, l'endroit où se fera cette rupture , a été défini d'avance étant donné qu'on a prévu une zone de rupture (41) (gorge 43) sur l'arbre (20) d'un organe de coupe rotatif (10) entraîné par le bas. Cette rupture a été bien visualisée sur la figure 6. Comme expliqué plus haut, cette zone de rupture (41) est prévue à l'extrémité supérieure (19) de l'arbre (20) s'étendant en-dehors du roulement (24). Ceci présente plusieurs avantages. Un premier avantage réside dans le fait que la rupture a été reportée de la denture de la roue dentée (34) et/ou des roues dentées (35) voisines sur l'arbre (20). Un deuxième avantage réside dans le fait que l'organe de coupe rotatif (10) (conjointement avec l'entraîneur (17) et le bout (20′) de l'arbre (20) cassé) se désolidarise entièrement de la barre de coupe (9) et ne risque donc pas de freiner ou de bloquer à son tour les organes de coupe (10) adjacents. Un troisième avantage enfin réside dans le fait que le bout (20˝) de l'arbre (20) cassé continue à être parfaitement guidé en rotation dans le roulement (24). De cette sorte, l'engrènement de la roue dentée (34) avec les roues dentées (35) voisines reste parfaitement assuré.

Comme expliqué plus haut également, il a été prévu un organe d'arrêt (42) (épaulement (44)) entre la zone de rupture (41) (gorge (43)) et la bague intérieure (25) du roulement (24). Grâce à cet organe d'arrêt (42) (épaulement (44)) les deux parties (26, 27) de la bague intérieure (25) du roulement (24) sont sensiblement maintenues en place après rupture de l'arbre (20) au niveau de la zone de rupture (41) (gorge (43)).

Ceci contribue à maintenir l'engrènement parfait entre la roue dentée (34) et les roues dentées (35) adjacentes après rupture de l'arbre (20).

Le remplacement d'un palier (21) s'opère de la manière suivante :
- on dévisse les écrous (30), ce qu'il est possible de faire sans séparer la partie supérieure (28) de la poutre porteuse (12) de la partie inférieure (31) de ladite poutre porteuse (12),
- on extrait l'ensemble palier (21) - bout d'arbre (20˝) - roue dentée (34) de la poutre porteuse (12) ; ceci est possible étant donné que le diamètre extérieur de la roue dentée (34) est inférieur à celui de l'alésage (32),
- on monte un nouvel ensemble prémonté palier (21) - arbre (20) - entraîneur (17) - roue dentée (34) sur la poutre porteuse (12), et
- on fixe l'organe de coupe (10) sur le nouvel entraîneur (17) si ledit organe de coupe (10) n'a pas subit de dégâts lors du choc ; dans le cas contraire, on monte également un nouvel organe de coupe (10).

Ce mode de réparation est prévu pour les utilisateurs qui veulent immédiatement continuer à travailler.

Dans le cas contraire, il est possible de ne changer que l'arbre (20) cassé. Pour ce faire, il faudra après avoir démonté l'ensemble palier (21) - bout d'arbre (20˝) - roue dentée (34) :
- dévisser l'écrou (36),
- retirer la roue dentée (34),
- extraire le bout d'arbre (20˝);
- remonter un nouvel ensemble arbre (20) - entraîneur (17),
- remettre en place la roue dentée (34), et
- revisser l'écrou (36).
L'exemple qui vient d'être décrit n'est qu'une réalisation préférée de l'idée générale enseignée par la présente invention telle qu'elle est caractérisée dans les revendications.

En effet, il y a tout d'abord lieu de faire remarquer que si la faucheuse (1) de l'exemple décrit est une faucheuse portée arrière, on comprendra que l'invention concerne également une faucheuse trainée, une faucheuse portée avant, etc... L'invention concerne par ailleurs aussi de telles faucheuse équipées d'organes de traitement du produit coupé tels qu'organes de conditionnement, d'ensilage, de pressage, etc...

Dans l'exemple représenté, les organes d'entraînement (8) logés dans la poutre porteuse (12) sont des roues dentées cylindriques (34, 35). Dans l'invention, ces organes d'entraînement (8) pourront toutefois être différents, tels que par exemple des roues dentées coniques entraînées par un arbre d'entraînement en une ou plusieurs parties s'étendant longitudinalement dans la poutre porteuse (12). Par ailleurs, alors que dans l'exemple représenté, la transmission du mouvement aux organes d'entraînement (8) se fait au travers de l'organe de coupe (10′), cette transmission pourra aussi se faire au moyen d'un carter de renvoi latéral.

La forme des organes de coupe (10, 10′) ainsi que leur nombre pourront également être différent.

On comprendra enfin encore que la zone de rupture (41), respectivement l'organe d'arrêt (42) pourront être différents de la gorge (43), respectivement de l'épaulement (44).

## Revendications

1. Faucheuse (1) comportant une barre de coupe (9) munie d'une poutre porteuse (12) au-dessus de laquelle s'étend une pluralité d'organes de coupe rotatifs (10, 10'), lesdits organes de coupe rotatifs (10, 10') tournant chacun autour d'un axe géométrique (22) dirigé vers le haut et au moins un (10) desdits organes de coupe rotatifs (10, 10') étant entraîné par le bas au moyen d'organes d'entraînement (8) logés dans ladite poutre porteuse (12) et comportant des roues dentées (34, 35), chaque organe de coupe rotatif (10) entraîné par le bas étant lié rigidement à un arbre (20) tournant autour de l'axe géométrique (22) correspondant et étant, à cet effet, guidé dans un palier (21) à roulement(24) lié rigidement à ladite poutre porteuse (12), ledit arbre (20) étant lié rigidement à son extrémité inférieure (33) à une desdites roues dentées (34), caractérisée par le fait que l'arbre (20) d'un organe de coupe rotatif (10) entraîné par le bas comporte une zone de rupture (41) à son extrémité (19) s'étendant vers le haut, en-dehors du roulement (24).

2. Faucheuse selon la revendication 1, caractérisée par le fait que la zone de rupture (41) est constituée par un important changement de section de l'arbre (20).

3. Faucheuse selon la revendication 2, caractérisée par le fait que la zone de rupture (41) est constituée par une gorge (43).

4. Faucheuse selon l'une au moins des revendications 1 à 3, caractérisée par le fait que l'arbre (20) d'un organe de coupe rotatif (10) entraîné par le bas comporte à son extrémité (19) s'étendant vers le haut, en dehors du roulement (24), un organe d'arrêt (42) prévu entre ladite zone de rupture (41) et la bague intérieure (25) du roulement (24) et destiné à empêcher la translation de l'arbre (20) suivant l'axe géométrique (22) correspondant,notamment après rupture dudit arbre (20) au niveau de la zone de rupture (41).

5. Faucheuse selon la revendication 4, caractérisée par le fait que l'organe d'arrêt (42) est constitué par un épaulement (44) de l'arbre (20).

6. Faucheuse selon l'une au moins des revendications 4 ou 5, caractérisée par le fait, qu'avant rupture de l'arbre (20), il existe un très faible jeu (45) entre l'organe d'arrêt (42) et le roulement (24).

7. Faucheuse selon la revendication 6, caractérisée par le fait que la hauteur (46) de l'organe d'arrêt (42) est faible.

8. Faucheuse selon la revendication 7, caractérisée par le fait que la hauteur (46) de l'organe d'arrêt (42) ne dépasse pas la valeur du rayon (48) de la bague intérieure (25) du roulement (24).

9. Faucheuse selon l'une au moins des revendications 6 à 8, caractérisée par le fait que la largeur (47) de l'organe d'arrêt (42) est faible.

10. Faucheuse selon l'une au moins des revendications 1 à 9, caractérisée par le fait, qu'à son extrémité supérieure (19), l'arbre (20) est lié rigidement à un entraîneur (17) auquel est lié rigidement l'organe de coupe rotatif (10) correspondant, et que la bague intérieure (25) du roulement (24) est serrée entre ledit entraîneur (17) et la roue dentée (34) liée rigidement à l'extrémité inférieure (33) dudit arbre (20).

11. Faucheuse selon la revendication 10, caractérisée par le fait que l'entraîneur (17) est lié rigidement et de manière indémontable à l'extrémité supérieure (19) de l'arbre (20), que la roue dentée (34) est liée de manière démontable à l'extrémité inférieure (33) de l'arbre (20), et que la bague intérieure (25) du roulement (24) est serrée entre ledit entraîneur (17) et ladite roue dentée (34) au moyen d'un organe de liaison à filetage (36) vissé à l'extrémité inférieure (33) de l'arbre (20).

12. Faucheuse selon l'une au moins des revendications 1 à 11, caractérisée par le fait que le roulement (24) est un roulement à double rangée de billes à contact oblique, dont la bague intérieure (25) est en deux parties (26, 27).

13. Faucheuse selon l'une au moins des revendications 1 à 12, caractérisée par le fait que le palier (21) est centré dans un alésage (32) correspondant pratiqué dans la partie supérieure (28) de la poutre porteuse (12), et que le diamètre extérieur de la roue dentée (34) correspondante est inférieur au diamètre dudit alésage (32), ledit palier (21) étant lié à la poutre porteuse (12) par des organes d'assemblage (29, 30) pouvant être manoeuvrés de l'extérieur de la poutre porteuse (12).

## Claims

1. A mower (1) comprising a cutting bar (9) provided with a carrying beam (12) above which there extends a plurality of rotary cutting elements (10, 10'), the said rotary cutting elements (10, 10') each turning around an upwardly directed geometric axis (22) and at least one (10) of the said rotary cutting elements (10, 10') being driven from below by means of drive elements (8) housed in the said carrying beam (12) and comprising gears (34, 35), each rotary cutting element (10) driven from below being rigidly connected to a shaft (20) turning around the corresponding geometric axis (22) and, for this purpose, being guided in a bearing (21) with a roller bearing (24), rigidly connected to the said carrying beam (12), the said shaft (20) being rigidly connected at its lower end (33) to one of the said gears (34), characterised in that the shaft (20) of a rotary cutting element (10) driven from below has a break zone (41) at its end (19) extending upwards, outside the roller bearing (24).

2. A mower in accordance with claim 1, characterised in that the break zone (41) is formed by a significant change of section of the shaft (20).

3. A mower in accordance with claim 2, characterised in that the break zone (41) is formed by a groove (43).

4. A mower in accordance with at least one of claims 1 to 3, characterised in that the shaft (20) of a rotary cutting element (10) driven from below has at its end (19) extending upwards, outside the roller bearing (24), a stop element (42) provided between the said break zone (41) and the inner race (25) of the roller bearing (24) and intended to prevent the translation of the shaft (20) along the corresponding geometric axis (22), particularly after breaking of the said shaft (20) at the level of the break zone (41).

5. A mower in accordance with claim 4, characterised in that the stop element (42) is formed by a shoulder (44) of the shaft (20).

6. A mower in accordance with at least one of claims 4 or 5, characterised in that, before the breaking of the shaft (20), there is a very slight play (45) between the stop element (42) and the roller bearing (24).

7. A mower in accordance with claim 6, characterised in that the height (46) of the stop element (42) is small.

8. A mower in accordance with claim 7, characterised in that the height (46) of the stop element (42) does not exceed the value of the radius (48) of the inner race (25) of the roller bearing (24).

9. A mower in accordance with at least one of claims 6 to 8, characterised in that the width (47) of the stop element (42) is small.

10. A mower in accordance with at least one of claims 1 to 9, characterised in that, at its upper end (19), the shaft (20) is rigidly connected to a driver (17) to which the corresponding rotary cutting element (10) is rigidly connected, and in that the inner race (25) of the roller bearing (24) is clamped between the said driver (17) and the gear (34) rigidly connected to the lower end (33) of the said shaft (20).

11. A mower in accordance with claim 10, characterised in that the driver (17) is rigidly connected, unable to be detached, to the upper end (19) of the shaft (20), in that the gear (34) is connected detachably to the lower end (33) of the shaft (20), and in that the inner race (25) of the roller bearing (24) is clamped between the said driver (17) and the said gear (34) by means of a threaded connecting element (36) screwed to the lower end (33) of the shaft (20).

12. A mower in accordance with one at least of claims 1 to 11, characterised in that the roller bearing (24) is a roller bearing with two rows of oblique contact balls, whose inner race (25) is in two parts (26,27).

13. A mower in accordance with at least one of claims 1 to 12, characterised in that the bearing (21) is centred in a corresponding bore (32) made in the upper part (28) of the carrying beam (12), and in that the outer diameter of the corresponding gear (34) is less than the diameter of the said bore (32), the said bearing (21) being connected to the carrying beam (12) by assembly elements (29,30) which may be manipulated from outside the carrying beam (12).

## Patentansprüche

1. Mähmaschine (1) mit einem Mähbalken (9), der mit einem Tragbalken (12) versehen ist, über dem sich mehrere rotierende Schneidorgane (10, 10') befinden, welche rotierende Schneidorgane (10, 10') jeweils um eine aufrechtstehende geometrische Achse (22) rotieren, wobei zumindest eines (10) der rotierenden Schneidorgane (10, 10') von unten mittels Antriebsorganen (8) angetrieben wird, die in dem Tragbalken (12) untergebracht sind und Zahnräder (34, 35) umfassen, wobei jedes von unten angetriebene rotierende Schneidorgan (10) starr mit einer Welle (20) verbunden ist, die um die entsprechende geometrische Achse (22) rotiert und zu diesem Zweck in einer Lagerung (21) mit Wälzlager (24) geführt ist, die starr mit dem Tragbalken (12) verbunden ist, und die Welle (20) starr an ihrem unteren Ende (33) mit einem der Zahnräder (34) verbunden ist, dadurch gekennzeichnet, dass die Welle (20) eines von unten angetriebenen rotierenden Schneidorgans (10) eine Bruchzone (41) an ihrem nach oben ragenden Ende (19) ausserhalb des Wälzlagers (24) umfasst.

2. Mähmaschine nach Anspruch 1, dadurch gekennzeichnet, dass die Bruchzone (41) von einer starken Veränderung des Querschnitts der Welle (20) gebildet ist.

3. Mähmaschine nach Anspruch 2, dadurch gekennzeichnet, dass die Bruchzone (41) von einer Nut (43) gebildet ist.

4. Mähmaschine nach zumindest einem der Ansprüche 1 bis 3, dadurch gekennzeichnet, dass die Welle (20) eines von unten angetriebenen rotierenden Schneidorgans (10) an ihrem sich nach oben erstreckenden Ende (19) ausserhalb des Wälzlagers (24) ein Sperrorgan (42) aufweist, das zwischen der Bruchzone (41) und dem Innenring (25) des Wälzlagers (24) vorgesehen ist und die Verschiebung der Welle (20) entlang der entsprechenden geometrischen Achse (22) insbesonders nach Bruch der Welle (20) im Bereich der Bruchzone (41) verhindern soll.

5. Mähmaschine nach Anspruch 4, dadurch gekennzeichnet, dass das Sperrorgan (42) von einer Schulter (44) der Welle (20) gebildet ist.

6. Mähmaschine nach zumindest einem der Ansprüche 4 oder 5, dadurch gekennzeichnet, dass vor dem Bruch der Welle (20) ein sehr geringes Spiel (45) zwischen Sperrorgan (42) und Wälzlager (24) besteht.

7. Mähmaschine nach Anspruch 6, dadurch gekennzeichnet, dass die Höhe (46) des Sperrorgans (42) gering ist.

8. Mähmaschine nach Anspruch 7, dadurch gekennzeichnet, dass die Höhe (46) des Sperrorgans (42) den Wert des Radius (48) des Innenrings (25) des Wälzlagers (24) nicht überschreitet.

9. Mähmaschme nach zumindest einem der Ansprüche 6 bis 8, dadurch gekennzeichnet, dass die Breite (47) des Sperrorgans (42) gering ist.

10. Mähmaschine nach zumindest einem der Ansprüche 1 bis 9, dadurch gekennzeichnet, dass die Welle (20) an ihrem oberen Ende (19) starr mit einem Mitnehmer (17) verbunden ist, mit welchem das entsprechende rotierende Schneidorgan (10) starr verbunden ist, und dass der Innenring (25) des Wälzlagers (24) zwischen dem Mitnehmer (17) und dem starr mit dem unteren Ende (33) der Welle (20) verbundenen Zahnrad (34) eingeklemmt ist.

11. Mähmaschine nach Anspruch 10, dadurch gekennzeichnet, dass der Mitnehmer (17) starr und unlösbar mit dem oberen Ende (19) der Welle (20) verbunden ist, dass das Zahnrad (34) lösbar mit dem unteren Ende (33) der Welle (20) verbunden ist und dass der Innenring (25) des Wälzlagers (24) zwischen dem Mitnehmer (17) und dem Zahnrad (34) mittels eines mit Gewinde versehenen Verbindungsorgans (36), das auf das untere Ende (33) der Welle (20) geschraubt ist, eingeklemmt ist.

12. Mähmaschine nach zumindest einem der Ansprüche 1 bis 11, dadurch gekennzeichnet, dass das Wälzlager (24) ein zweireihiges Schrägkugellager ist, dessen Innenring (25) aus zwei Teilen (26, 27) besteht.

13. Mähmaschine nach zumindest einem der Ansprüche 1 bis 12, dadurch gekennzeichnet, dass das Lager (21) in einer entsprechenden Bohrung (32) zentriert ist, die im Oberteil (28) des Tragbalkens (12) hergestellt ist, und dass der Aussendurchmesser des entsprechenden Zahnrades (34) kleiner als der Durchmesser der Bohrung (32) ist, wobei das Lager (21) mit dem Tragbalken (12) durch Verbindungsorgane (29, 30) verbunden ist, die von ausserhalb des Tragbalkens (12) betätigt werden können.
